# EUROPEAN PATENT APPLICATION

(11) **EP 3 446 926 A1**
(43) Date of publication of application: **27.02.2019**
(21) Application number: 18188030.3
(22) Date of filing: 08.08.2018
(51) Int. Cl.: B60R 9/10, B60R 9/048

(54) **BICYCLE RACK FOR A CAR**

(30) Priority: 24.08.2017 IT 201700095641
(71) Applicant: Peruzzo, Martina, 36060 Romano d'Ezzelino (VI) (IT)
(72) Inventor: Peruzzo, Martina, 36060 Romano d'Ezzelino (VI) (IT)
(74) Representative: Modiano, Micaela Nadia

(57) **Abstract**

A bicycle rack for a car, of the type comprising a load-bearing structure (11) and an arm (12) connected thereto with an end thereof and provided with a grip clamp (13) at the opposite end. The grip clamp (13) comprises two jaws (16a, 16b) which are pivoted on a supporting body (17) and can rotate to open and close the grip clamp (13) by way of a manual control (18) installed at the load-bearing structure (11) and connected to the jaws (16a, 16b) by way of at least one traction cable (19) which is adapted to slide within the arm (12). The manual control (18) comprises:
- ratcheted locking means (20), adapted to move and keep the jaws (16a, 16b) in a closed configuration of the grip clamp (13),
- release means (21), adapted to rotate the jaws (16a, 16b) in order to open the grip clamp (13).

## Description

The present invention relates to a bicycle rack for a car.

Nowadays bicycle racks are known and widespread which comprise a load-bearing structure, to be fixed to the roof of a car, and an arm provided with a grip clamp for a portion of the frame of a bicycle.

The grip clamp can comprise for example two rotatable jaws, pivoted on a supporting body, which rotate in order to open and close the clamp.

In some kinds of bicycle rack, the clamp is closed manually but its opening is controlled by way of a lever connected to the jaws with a cable.

During the manual operation to close the clamp, the operator has to use one hand to support the bicycle loaded onto the load-bearing structure mounted on the roof of the car, and use the other hand to perform the closing operation, looking for an aid with which to reach the clamp, which is supported by the arm at the height of the portion of frame of the bicycle, i.e. higher than the roof.

Such operation is therefore complex and inconvenient for the operator, who is also forced to carry it out with great efforts to support the bicycle and at the same time reach the clamp, and also it requires a relatively long time.

The aim of the present invention is to provide a bicycle rack that is capable of improving the known art in one or more of the above mentioned aspects.

Within this aim, an object of the invention is to provide a bicycle rack that makes it possible for the operator to easily and quickly lock the bicycle in place and at different points of the frame.

Another object of the invention is to provide a bicycle rack in which the clamp can easily be maneuvered both when opening and when closing.

Furthermore, another object of the present invention is to overcome the drawbacks of the known art in an alternative manner to any existing solutions.

Another object of the invention is to provide a bicycle rack that is highly reliable, easy to implement and at low cost.

This aim and these and other objects which will become better apparent hereinafter are achieved by a bicycle rack according to claim 1, optionally provided with one or more of the characteristics of the dependent claims.

Further characteristics and advantages of the invention will become better apparent from the description of a preferred, but not exclusive, embodiment of the bicycle rack according to the invention, which is illustrated by way of non-limiting example in the accompanying drawings wherein:
Figure 1 shows a bicycle rack according to the invention;
Figure 2 is a perspective view of the manual control;
Figure 3 is a perspective view of a component of the manual control;
Figure 4 is a perspective view of another component of the manual control;
Figure 5 is a perspective view of some components of the manual control;
Figure 6 is a cross-sectional side view of the manual control in an inactive configuration;
Figure 7 is a cross-sectional side view of the manual control in a first configuration for use;
Figure 8 is a cross-sectional side view of the manual control in a second configuration for use;
Figure 9 is another cross-sectional view of the manual control in the inactive configuration;
Figure 10 is another cross-sectional view of the manual control in the second configuration for use;
Figure 11 is an exploded perspective view of a grip clamp of the bicycle rack according to the invention;
Figure 12 is a cross-sectional view of the grip clamp.

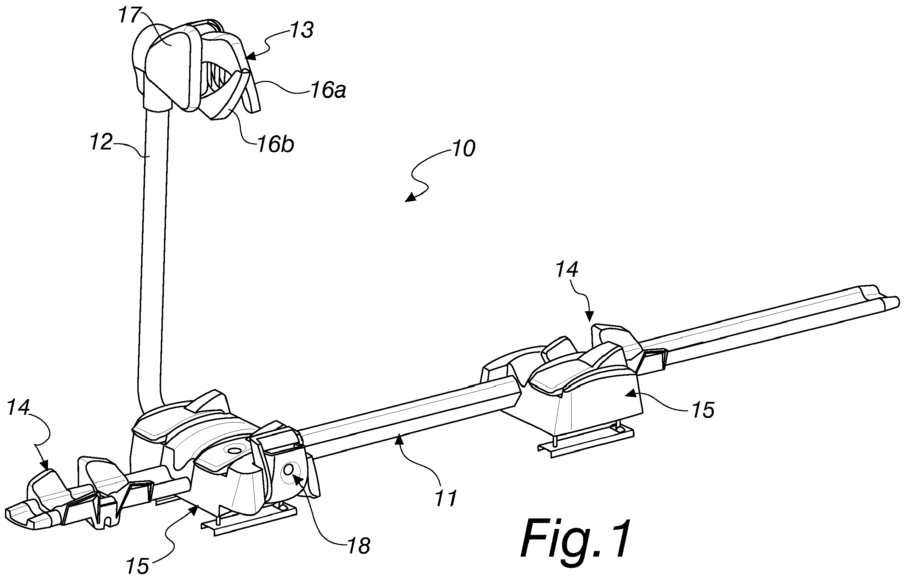

With reference to Figure 1, the bicycle rack according to the invention, generally designated by the reference numeral 10, comprises a load-bearing structure 11 and an arm 12 rotatably connected thereto with an end thereof and provided with a grip clamp 13 at the opposite end.

The bicycle rack 10 also comprises two wheel rests 14 and two bases 15 for anchoring to the roof-rack bars of a car.

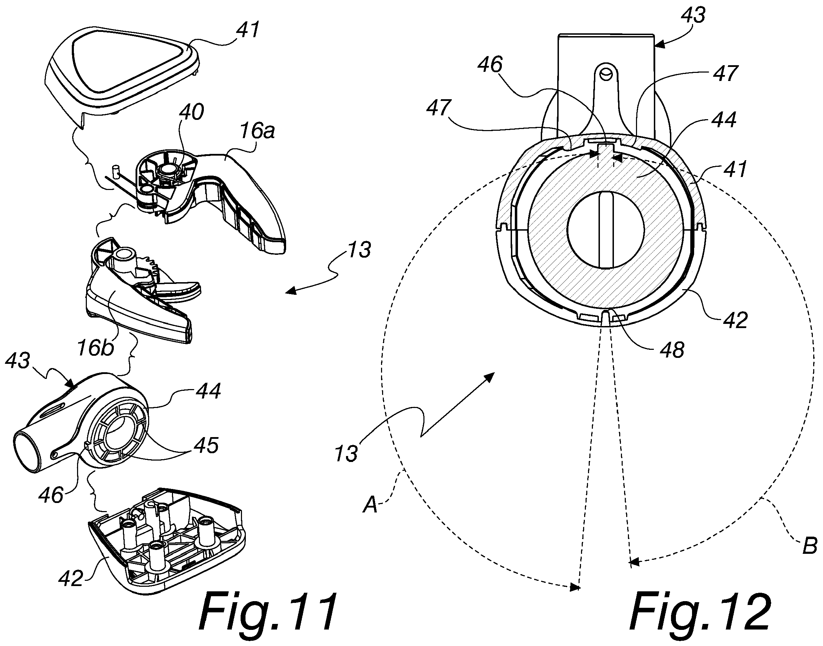

The grip clamp 13 is shown in Figure 1 and in the exploded view in Figure 11. It comprises two jaws 16a and 16b which are pivoted on a supporting body 17.

The jaws 16a and 16b can rotate to open and close the grip clamp 13 by way of a manual control 18 which is installed at the load-bearing structure 11, in particular at an anchoring base 15, and is connected to the jaws 16a, 16b by way of at least one traction cable 19 which is adapted to slide within the arm 12.

In particular, one end of the traction cable 19 is locked to the supporting body 17 of the grip clamp 13 and the cable passes through the jaw 16a by passing through an adapted passage.

The two jaws 16a and 16b conveniently have arcs with contoured teeth which, by meshing with each other, enable the transmission of the rotation from the first jaw 16a, owing to the sliding of the cable, to the second jaw 16b.

There is also a spring 40 mounted around the center of rotation of the first jaw 16a, and is adapted to cause its return to the open position when traction is removed from the cable 19.

The supporting body 17 comprises two half-shells 41 and 42, from which the jaws 16a and 16b protrude and which are adapted to rotate with respect to a rear support 43 substantially through a straight angle A in one direction of rotation and through a straight angle B in the opposite direction, as shown in Figure 12.

Figure 12 shows a cross-sectional view of the clamp upon the coupling at the rear support 43 and the two half-shells 41 and 42.

The rear support 43 is provided with a ring-shaped protrusion 44, with reinforcement ribs 45 visible in Figure 11, about which the two half-shells 41 and 42 can rotate.

The ring-shaped protrusion 44 has an outward projection 46, which in a first configuration of the clamp is positioned between two protrusions 47 of the internal wall of a half-shell 41. The two protrusions 47 prevent the accidental rotation of the grip clamp 13 but can be defeated by way of a rotation imparted by the user to the supporting body 17.

In the position diametrically opposite to the projection 46, the other half-shell 42 has a tab 48 which is adapted to prevent a rotation substantially greater than a straight angle in both directions. In particular, considering the thickness of the tab 48, the half-shells 41 and 42 can rotate 175° per direction, until they abut against the tab 48.

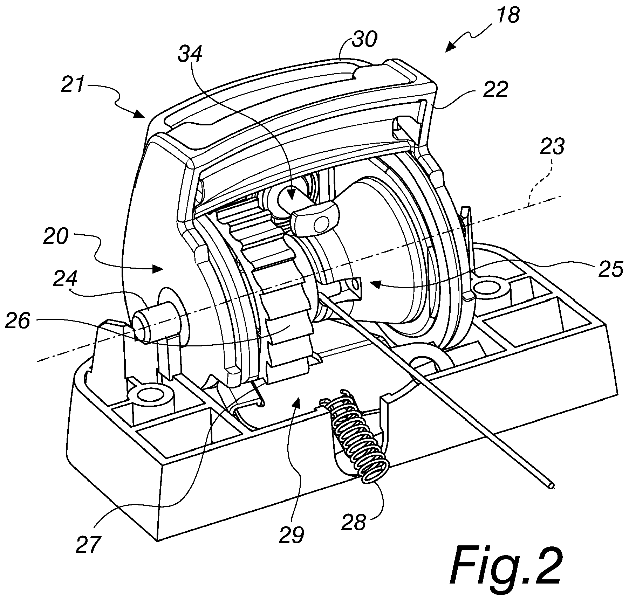

The manual control 18 and its components are shown in Figures 2 to 10.

It advantageously comprises:
- ratcheted locking means 20, adapted to move and keep the jaws 16a, 16b in a closed configuration of the grip clamp 13,
- release means 21, adapted to rotate the jaws 16a, 16b in order to open the grip clamp 13.

The ratcheted locking means 20 comprise a lever 22 mounted on a rotation axis 23, in particular on a shaft 24, together with a cable winding spool 25 for the traction cable 19. The lever 22 is adapted to rotate with the cable winding spool 25 during the opening of the grip clamp 13.

At one end of the cable winding spool 25 there is a toothed flange 26, which consists of a saw-toothed wheel, for engaging with a sliding pawl 27 pushed by elastic means 28 against the flange 26. Such sliding pawl 27 is adapted to prevent the return rotation of the lever 22 when no rotation is imparted thereto.

The sliding pawl 27 is part of a plate element 29, described in more detail below, positioned substantially radially with respect to the spool 25.

The elastic means 28 are constituted by a helical spring.

The release means 21 comprise a release lever 30 mounted on the rotation axis 23.

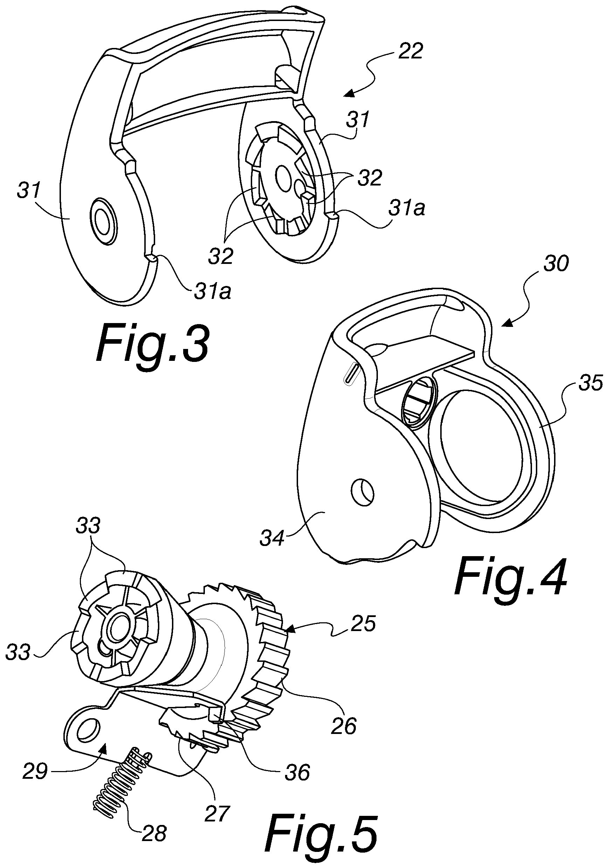

The lever 22, shown on its own in Figure 3, has a contoured body that connects two mutually parallel end flanges 31, one of which has first teeth 32 on its internal face which are adapted to mesh with second teeth 33 which are on one side of the cable winding spool 25, on the opposite side from the side with the flange 26, in order to rotate it. The second teeth 33 are shown and clearly visible in Figure 5.

At least one of the end flanges 31 (both in the example shown) is provided with a stroke limit tooth 31a which is adapted to abut at the end of its stroke against the structure of a base 15 for anchoring to a car.

The release lever 30, shown on its own in Figure 4, is also constituted by a contoured body that connects a cam-like first end flange 34, which is adapted to cause the disengagement of the sliding pawl 27 from the teeth of the flange 26 (by radially propelling the pawl away from the spool), with a second end flange 35. Since the release lever 30 is positioned with its flanges between the flanges of the lever 22, the second end flange 35 is conveniently provided with an opening for permitting the inner face of the end flange 31 to come into contact with the second teeth 33 of the cable winding spool 25.

As can be seen in Figure 5, the sliding pawl 27 is part of the plate 29, which is cut and folded so as to obtain at least the pawl 27 and a lateral element 36 for resting against the inner side of the flange 26, which is adapted to laterally push the cable winding spool 25, along the shaft 24, away from the end flange 31 that supports the first teeth 32, during the displacement of the sliding pawl 27 from the teeth of the flange 26 induced by the cam of the first end flange 34.

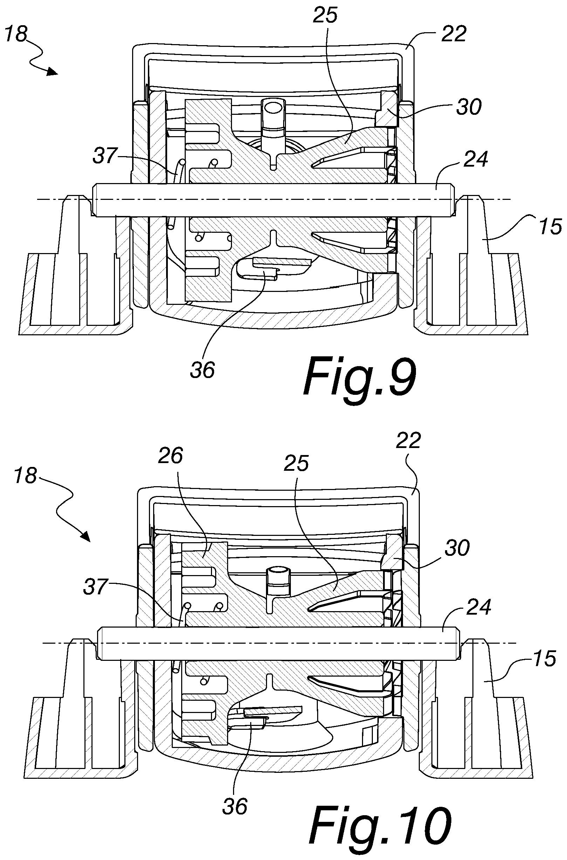

The bicycle rack comprises, between the cam-like end flange 34 and the flange 26 of the cable winding spool 25, a spring 37 (helical and mounted coaxially to the shaft 24) which is adapted to propel the cable winding spool 25 against the end flange 31 which supports the first teeth 32, in order to maintain the contact between the first teeth 32 and the second teeth 33. The spring 37 is indicated in the cross-sectional views shown in Figures 9 and 10.

The bicycle rack 10 conveniently comprises means of preventing the rotation 34 of the levers 22 and 30.

These in turn comprise a block adapted to join the release lever 30 to the structure of the anchoring base 15 for anchoring the bicycle rack 10 to a car, which carries the manual control 18, thus preventing the rotation of both levers.

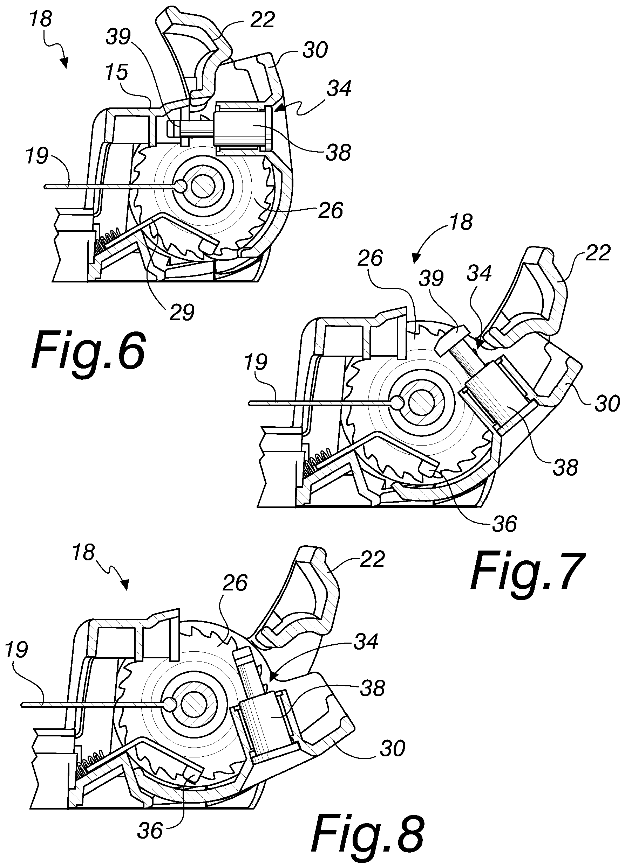

Such block 38 is visible in the cross-sectional views shown in Figures 6, 7 and 8. It engages with the release lever 30 and with the structure of the anchoring base 15, and to this end it is provided, in a known manner, with a cylindrical portion 38 into which a key, not shown, can be inserted from outside the release lever 30, and with a T-shaped portion 39, which engages with the structure of the anchoring base 15, thus preventing the accidental release of the block.

The block is adapted to rotate 90° following a corresponding rotation imparted by the key in the cylindrical portion 38, causing a 90° rotation of the T-shaped portion 39, which in such position is released from the structure of the anchoring base 15, thus allowing the block to be extracted.

Operation of the bicycle rack, according to the invention, is the following.

The block is rotated 90° by way of the key and the levers are then free to rotate by virtue of the manual action of the user.

Once the bicycle is positioned on the wheel rests 14, to close the jaws 16a and 16b around the tubular frame of the bicycle the user acts on the lever 22, applying an outward rotation thereupon about the rotation axis and also entraining the release lever 30 in rotation, until the stroke limiting teeth 31 touch the structure of the anchoring base 15.

Figures 2 and 6 show the manual control 18 in the initial position, before rotating the lever 22.

The lever 22, by way of the first teeth 31, entrains the cable winding spool 25 in rotation. During rotation of the spool, the teeth of the flange 26 slide on the sliding pawl 27, which slides up and over them one by one, pushed against the flange 26 by the elastic means 28.

During rotation of the lever 22, the traction cable is wound on the cable winding spool 25 and the grip clamp 13 is closed with the rotation of the first jaw 16a, owing to the traction of the cable 19, and therefore also of the second jaw 16b onto the frame of the bicycle.

At the end of the rotation of the lever 22, the sliding pawl 27, being engaged with a tooth of the flange 26, prevents the return rotation of the lever 22 and therefore the reopening of the grip clamp 13. This step is shown in Figure 7.

Release occurs in the following manner.

Applying an outward rotation only to the release lever 30, as shown in Figure 8, causes the rotation of the cam-like flange 34 which lifts the sliding pawl 27 causing the rotation of the plate element 29 about a center of rotation thereof, the latter being identifiable at the hole visible in Figure 2 and in Figure 5. A pin protruding from a half-shell of the structure of the anchoring base 15 passes through the hole, and is adapted for insertion into a corresponding hollow cylinder of the other half-shell.

With the rotation of the plate 29, the lateral element 36 pushes the cable winding spool 25 laterally, defeating the resisting force exerted by the spring 37, away from the end flange 31 that supports the first teeth 32, in so doing causing the disengagement of the spool 25 from the lever 22.

The cable winding spool 25 is free and the cable 19 is not pulled in.

With no traction on the cable 19, the spring 40 on the grip clamp 13 acts by making the jaw 16a rotate open, and therefore also the second jaw 16b connected to the first.

The operations described therefore make it possible to close and reopen the grip clamp 13 by acting exclusively on the manual control 18, which is in a region that is easily accessible to the user, being arranged substantially at the height of the car roof, therefore easily and quickly.

Furthermore, the presence of a grip clamp that can rotate, substantially 360°, makes it possible to close the jaws on various points of the frame of the bicycle, or optionally around the bottom portion of the saddle, making the bicycle rack adaptable to bicycles of different shapes and sizes.

In practice it has been found that the invention fully achieves the intended aim and objects by providing a bicycle rack that makes it possible for the operator to lock the bicycle in place and release it easily and quickly, easily maneuvering the grip clamp both when opening and when closing and therefore making it possible to easily fasten the bicycle to the car roof.

The invention thus conceived is susceptible of numerous modifications and variations, all of which are within the scope of the appended claims. Moreover, all the details may be substituted by other, technically equivalent elements.

In practice the materials employed, provided they are compatible with the specific use, and the contingent dimensions and shapes, may be any according to requirements and to the state of the art.

The disclosures in Italian Patent Application No. 102017000095641 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A bicycle rack for a car, of the type comprising a load-bearing structure (11) and an arm (12) connected thereto with an end thereof and provided with a grip clamp (13) at the opposite end, said grip clamp (13) comprising two jaws (16a, 16b) which are pivoted on a supporting body (17), said bicycle rack (10) being **characterized in that** said jaws (16a, 16b) can rotate to open and close said grip clamp (13) by way of a manual control (18) installed at said load-bearing structure (11) and connected to said jaws (16a, 16b) by way of at least one traction cable (19) adapted to slide within said arm (12), said manual control (18) comprising
- ratcheted locking means (20), adapted to move and keep said jaws (16a, 16b) in a closed configuration of said grip clamp (13),
- release means (21), adapted to rotate said jaws (16a, 16b) in order to open said grip clamp (13).

2. The bicycle rack according to claim 1, **characterized in that** said ratcheted locking means (20) comprise a lever (22) mounted on a rotation axis (23) together with a cable winding spool (25) for said traction cable (19), with which it is adapted to rotate during the opening of said grip clamp (13), at at least one end of said cable winding spool (25) there being a toothed flange (26), for engagement with a sliding pawl (27) pushed by elastic means (28) against said toothed flange (26), said sliding pawl (27) being adapted to prevent the return rotation of said lever (22) when a rotation is not imparted thereto.

3. The bicycle rack according to one or more of the preceding claims, **characterized in that** said release means (21) comprise a release lever (30) mounted on said rotation axis (23).

4. The bicycle rack according to one or more of the preceding claims, **characterized in that** said lever (22) has a contoured body that connects two mutually parallel end flanges (31), one of which is provided with first teeth (32) on its internal face which are adapted to mesh with second teeth (33) which are provided on one side of said cable winding spool (25), on an opposite side from a side with said toothed flange (26), in order to rotate it.

5. The bicycle rack according to one or more of the preceding claims, **characterized in that** at least one of said mutually parallel end flanges (31) is provided with a stroke limit tooth (31a) which is adapted to abut at the end of its stroke against the structure of an anchoring base (15) for anchoring said load-bearing structure (11) to a car.

6. The bicycle rack according to one or more of the preceding claims, **characterized in that** said release lever (30) is constituted by a contoured body that connects a cam-like first end flange (34), which is adapted to cause the disengagement of said sliding pawl (27) from the teeth of said toothed flange (26), with a second end flange (35).

7. The bicycle rack according to one or more of the preceding claims, **characterized in that** said sliding pawl (27) is part of a plate that is cut and folded so as to obtain said sliding pawl (27) and a lateral element (36) for resting against an inner side of said toothed flange (26).

8. The bicycle rack according to one or more of the preceding claims, **characterized in that** it comprises, between said cam-like first end flange (34) and said toothed flange (26) of said cable winding spool (25), a spring (37) adapted to push said cable winding spool (25) against said end flange (31) that supports said first teeth (32).

9. The bicycle rack according to one or more of the preceding claims, **characterized in that** said elastic means (28) are constituted by a helical spring.

10. The bicycle rack according to one or more of the preceding claims, **characterized in that** it comprises means (34) for preventing the rotation of said lever (22) and said release lever (30).

11. The bicycle rack according to one or more of the preceding claims, **characterized in that** said supporting body (17) comprises two half-shells (41) and (42), from which said jaws (16a) and (16b) protrude and which are adapted to rotate with respect to a rear support (43) substantially through a straight angle (A) in one direction of rotation and through a straight angle (B) in an opposite direction.
